(19) Europäisches Patentamt
European Patent Office
Office européen des brevets

(11) **EP 4 729 316 A1**

(12) **EUROPEAN PATENT APPLICATION**
published in accordance with Art. 153(4) EPC

(43) Date of publication:
**22.04.2026 Bulletin 2026/17**

(21) Application number: **24823468.4**

(22) Date of filing: **14.06.2024**

(51) International Patent Classification (IPC):
**B60G 7/00** (2006.01)   **C22C 38/00** (2006.01)
**C22C 38/60** (2006.01)

(52) Cooperative Patent Classification (CPC):
**B60G 7/00; C22C 38/00; C22C 38/60**

(86) International application number:
**PCT/JP2024/021680**

(87) International publication number:
**WO 2024/257855 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2023 JP 2023098024**

(71) Applicant: **Nippon Steel Corporation
Tokyo 100-8071 (JP)**

(72) Inventors:
• **OSANAI, Takumi
Tokyo 100-8071 (JP)**

• **TABATA, Ryo
Tokyo 100-8071 (JP)**
• **SHUTO, Hiroshi
Tokyo 100-8071 (JP)**
• **TAKAYAMA, Atsushi
Tokyo 100-8071 (JP)**
• **OTSUKA, Kenichiro
Tokyo 100-8071 (JP)**
• **SAKURADA, Eisaku
Tokyo 100-8071 (JP)**

(74) Representative: **Vossius & Partner
Patentanwälte Rechtsanwälte mbB
Siebertstraße 3
81675 München (DE)**

(54) **STRUCTURAL COMPONENT**

(57) A structural part comprised of steel sheet, the structural part having a flat part 10a and a bent part 10b, the bent part 10b satisfying the following formula (1) and formula (2):

$$25 \leq \sqrt{area} \leq 40 \ ... \ (1)$$

$$0.17 \leq r/t \leq 6.90 \ ... \ (2)$$

where,
$\sqrt{area}$ is a square root of a projected area of fine defects at an inside bend side of the bent part 10b [μm]
"r" is the smallest value of a radius of curvature of the inside bend side of the bent part 10b [mm]
"t" is a sheet thickness of the flat part 10a [mm].

Fig. 1

**Description**

FIELD

The present invention relates to a structural part.

BACKGROUND

In the past, it has been proposed to make an arithmetic mean roughness at a burled end face a predetermined value or less so as to make occurrence of fatigue cracks at the burled end face difficult (see PTL 1). Further, it has been proposed to provide a worked metal sheet with an arithmetic mean surface roughness at a projecting side surface of a ridge part of a cosmetic surface comprised of a predetermined value or less and thereby keep down the surface roughness at the projecting part surface of the ridge part (see PTL 2). Further, for quantitative evaluation of the effects of surface roughness on the fatigue strength, use of an √area parameter model has been proposed (see NPL 1).

[CITATION LIST]

[PATENT LITERATURE]

[PTL 1] Japanese Patent No. 7036298
[PTL 2] Japanese Patent No. 6954211

[NONPATENT LITERATURE]

[NPL 1] Yukitaka Murakami, Koji Takahashi, Koki Yamashita, "Quantitative Evaluation of Effects of Surface Roughness on Fatigue Strength", Transactions of the JSME (Edition A), vol. 63, no. 612 (1997), p. 1612 to 1619

SUMMARY

[TECHNICAL PROBLEM]

For example, application of ultra-high tensile materials to automobile chassis members has great merits such as lightening the weight of parts. On the other hand, due to the higher strength resulting from the use of ultra-high tensile materials, the formability tends to fall. Therefore, suitably designing the shapes of parts while keeping an eye on the limits of the materials leads to maximization of the merits of use of ultra-high tensile materials.

In the case of lower arms and other chassis parts, structures having M-shaped cross-sections etc. are adopted so as to enable the necessary rigidity to be secured even if reducing thickness along with use of high strength materials. From the viewpoint of increasing the degree of freedom when placing a necessary structural part in a limited space and avoiding interference with other parts, it is desirable to reduce the radius of curvature of an inside bend part as much as possible. Further, the radius of curvature of an inside bend part is desirably reduced as much as possible to make an engaged length longer in a limited space even when inserting a cylindrical bushing over an outside circumference of a cylindrical shape formed by burling etc.

However, if ending up bending by a small radius of curvature exceeding the limit of the material, there is the problem of fine cracks and other surface roughness occurring at the inside bend side. As a result, fatigue failure occurs starting from the surface roughness and sufficient fatigue durability can no longer be obtained. Conventional ultra-high tensile materials inherently had the problem of a low forming limit and inability of bent parts with small radii of curvature to be formed. Further, the limit value of the radius of curvature not harming fatigue durability changes depending on the material as well, but the problem also arose that the correspondence between the structure of the bent part and the material could not be clarified.

None of the art described in the above patent literature focuses on the surface roughness of the inside bend side. It is difficult to suppress a drop in fatigue durability caused by the surface roughness of the inside bend side.

Therefore, the present invention has as its object the provision of a structural part able to suppress a drop in fatigue durability caused by surface roughness of an inside bend side and the shape of the inside bend side.

[SOLUTION TO PROBLEM]

The present disclosure was made based on the above findings and has as its gist the following:

(1) A structural part comprised of steel sheet,

the structural part having a flat part and a bent part,
the bent part satisfying the following formula (1) and formula (2):

$$25 \leq \sqrt{area} \leq 40 \ ... \ (1)$$

$$0.17 \leq r/t \leq 6.90 \ ... \ (2)$$

where,
$\sqrt{area}$ is a square root of a projected area of fine defects at an inside bend side of the bent part [μm]
"r" is the smallest value of a radius of curvature of the inside bend side of the bent part [mm]
"t" is a sheet thickness of the flat part [mm].

(2) A structural part according to (1) satisfying the following formula (1)' and formula (2)':

$$30 \leq \sqrt{area} \leq 40 \ ... \ (1)'$$

$$0.17 \leq r/t \leq 3.45 \ ... \ (2)'$$

(3) The structural part according to the above (1) or (2) wherein a Vickers hardness of the flat part is 310 or more.
(4) The structural part according to the above (1) or (2) wherein a Vickers hardness of the flat part is 340 or more.
(5) The structural part according to any of the above (1) to (4) further satisfying the following formula (8):

$$30 \leq \sqrt{area} \leq 1.05\{0.0822(r/t)^3 - 0.7216(r/t)^2 - 0.2404(r/t) + 38.782\} \ ... \ (8)$$

[ADVANTAGEOUS EFFECTS OF INVENTION]

According to the present invention, the effect is exhibited that it is possible to provide a structural part able to suppress a drop in fatigue durability caused by surface roughness of an inside bend side and a shape of the inside bend side.

BRIEF DESCRIPTION OF DRAWINGS

FIG. 1 is a view showing an automobile suspension part as one example of a structural part according to the present disclosure.
FIG. 2 is a view showing a cross-section along a one-dot chain line I-I' in FIG. 1.
FIG. 3 is a view showing a state of acquiring five images of an inside bend side of a bent part and joining together the acquired five images.
FIG. 4 is a graph showing a technique for converting a curved surface to a flat surface for evaluating surface roughness.
FIG. 5 is a view schematically showing surface roughness of an inside bend side expressed by a characteristic line C3.
FIG. 6 is a histogram showing a distribution of nano-hardness of a low Si type.
FIG. 7 is a histogram showing a distribution of nano-hardness of a high Si type.
FIG. 8 is a graph showing a uniform elongation u-El (ordinate) and a distribution of a value n' obtained by dividing an interquartile range by a mean nano-hardness (abscissa) for the high Si type and low Si type.
FIG. 9 is a graph plotting an $\sqrt{area}$ and r/t for the respective Invention Examples 1 to 10 and Comparative Examples 1 to 10 shown in Table 1.

DESCRIPTION OF EMBODIMENTS

Below, several embodiments according to the present disclosure will be explained while referring to the drawings. However, the explanation of these is simply intended to illustrate preferred embodiments of the present disclosure and is not intended to limit the present disclosure to such specific embodiments. Note that the explanation will be given in the following order:

1. Summary of Present Disclosure
2. Effect of Fine Defects Present at Surface of Inside Bend Side on Fatigue Strength
3. Structural Part According to Present Disclosure
4. Method of Evaluation of Surface Roughness of Inside Bend Side
5. Regarding High Si Type and Low Si Type
6. Examples

1. Summary of Present Disclosure

In for example structural parts (parts for forming a structure) for automobile use, strength has been increased every year. Along with the higher strength, progress has been made in reducing weight by making the parts thinner. To realize lighter weight and higher performance structural parts, the combination of the "reduction of weight of the parts by higher strength and increased thinness" and the "design of structures for making use of the strength properties of steel" is important. For example, in structural parts for automobile use such as the higher strength and increased thinness chassis parts (for example, the lower arms and other suspension parts), fatigue cracks are formed due to the drop in rigidity accompanying the increased thinness and the drop in surface properties (surface roughness) accompanying processing. The fatigue properties of the parts sometimes deteriorate. In particular, if a structural part includes a bent part formed by bending, the inside bend side of the bent part is subjected to compressive deformation, therefore the surface properties fall compared with before processing. The increased surface roughness leads to deterioration of the fatigue properties. Chassis parts are important safety parts. They are constantly subjected to vibration and load. Raising the fatigue durability is necessary and essential. In the present embodiment, a structural part suppressing formation of fatigue cracks from an inside bend side by a suitable combination of the material and the part structure (in particular, the surface roughness of the inside bend side and bent shape) is provided.

In the present disclosure, by using an ultra-high tensile material (tensile strength 980 MPa or more) with a forming limit better than the past, it is possible to suppress deterioration of the surface roughness of the inside bend side of a bent part such as a press-formed part with an M-cross-section and make the surface smooth and to perform shaping making the radius of curvature of the inside bend side smaller. Further, the relationship between the range of radius of curvature of an inside bend side enabling satisfactory fatigue durability and material properties is clarified.

The inventors engaged in intensive studies and as a result discovered that if using an ultra-high tensile material better in forming limit than in the past, it is possible to suppress fatigue cracks occurring at a bent part if the parameters of the bent part, specifically the surface roughness of the inside bend side and the radius of curvature of the inside bend side, satisfy predetermined conditions. The properties of the material have an effect on the change of surface roughness of a bent part before and after processing. By managing the suitable surface properties of a bent part by the material and the shape (design) of the bent part, it is possible to improve the fatigue durability. Compared with conventional steel, the steel with the better forming limit according to the present embodiment is more resistant to increase of the surface roughness of the inside bend side of a bent part after processing (that is, is more resistant to growth of surface relief) and is improved in the fatigue durability. The greater the radius of curvature of the inside bend side, as a general trend, the more resistant to increase of the surface roughness at the inside bend side.

Ultra-high tensile materials excellent in forming limit according to the present disclosure may be classified as a high Si type with a relatively large content of Si and a low Si type with a relatively low content of Si. The two differ in mechanism of improvement of the fatigue durability. With the high Si type, the surface roughness becomes relatively large due to the presence of scale derived from the Si, but the n-value relating to formability (work-hardening exponent) is high, therefore there is resistance to formation of fine cracks at an inside bend side. For this reason, in the high Si type, creasing of a compressed part at an inside bend side at the time of bending is suppressed and high durability is realized. On the other hand, with the low Si type, the n-value is relatively low, but the surface roughness derived from Si scale is small, therefore formation of fine cracks at an inside bend side is suppressed. For this reason, in the low Si type, by making use of the excellent flatness of the surface, the formation of fatigue cracks is suppressed and a high durability can be realized.

The inventors engaged in intensive studies and as a result came up with the idea of incorporating the differences in mechanism of fatigue cracking of the high Si type and the low Si type into the above-mentioned parameters and setting the ranges of the parameters for each type of steel. In the present disclosure, the suitable ranges of parameters in the case of using low Si type ultra-high tensile materials among the high Si type and low Si type will be explained.

2. Effect of Fine Defects Present at Surface of Inside Bend Side on Fatigue Strength

The inventors intensively studied the effects of a square root $\sqrt{\text{area}}$ of a projected area of fine defects at an inside bend side of a bent part on the fatigue strength and focused on the fact that, as described in the above NPL 1, a fatigue limit $\sigma_W$ is expressed by the $\sqrt{\text{area}}$ and the Vickers hardness by the following formula (3), therefore the $\sqrt{\text{area}}$ was focused on as a value of a property having an effect on the fatigue durability. Note that, "fine defects" may also mean the relief shapes at the surface of a press-formed part. "Fine defects" when bad go beyond just relief shapes and are observed as cracks.

$$\sigma W = [1.43(HV+120)\{(1-R)/2\}^{\alpha}]/(\sqrt{\text{area}})^{1/6} \qquad \dots (3)$$

where,

$\sigma W$: fatigue limit [MPa]
HV: Vickers hardness [HV kgf/mm$^2$]
$\alpha$: $0.226+HV\times10^{-4}$
R: stress ratio ($\sigma\min/\sigma\max$).

The $\sqrt{\text{area}}$ [$\mu$m] is calculated from the following formula (4) and formula (5) based on the description in the above NPL 1. Note that, in formula (4) and formula (5), "a" [$\mu$m] is the height of roughness (maximum height Rz), while 2b [$\mu$m] is the pitch of roughness (Rsm: mean length of the roughness elements or wavelength of height wave shape).
[Mathematical 1]

$$\sqrt{area} = \{2.97(a/2b) - 3.51(a/2b)^2 - 9.74(a/2b)^3\} \times 2b \qquad \dots (4)$$

(where, case of a/2b≤0.195)
[Mathematical 2]

$$\sqrt{area} = 0.38 \times 2b \qquad \dots (5)$$

(where, case of a/2b>0.195)

3. Structural Part According to Present Disclosure

In a bent part, the greater the value of the $\sqrt{\text{area}}$, the greater the surface roughness, therefore the more the structural part falls in fatigue durability. Further, the smaller the value of the ratio r/t of the radius of curvature of the inside bend side to the sheet thickness of the steel sheet, the more the structural part falls in fatigue durability. The inventors intensively studied the relationship between the $\sqrt{\text{area}}$ and r/t of a structural part and the fatigue properties of a structural part and discovered that if the $\sqrt{\text{area}}$ and the r/t are in predetermined ranges, the fatigue durability can be raised more than the past.

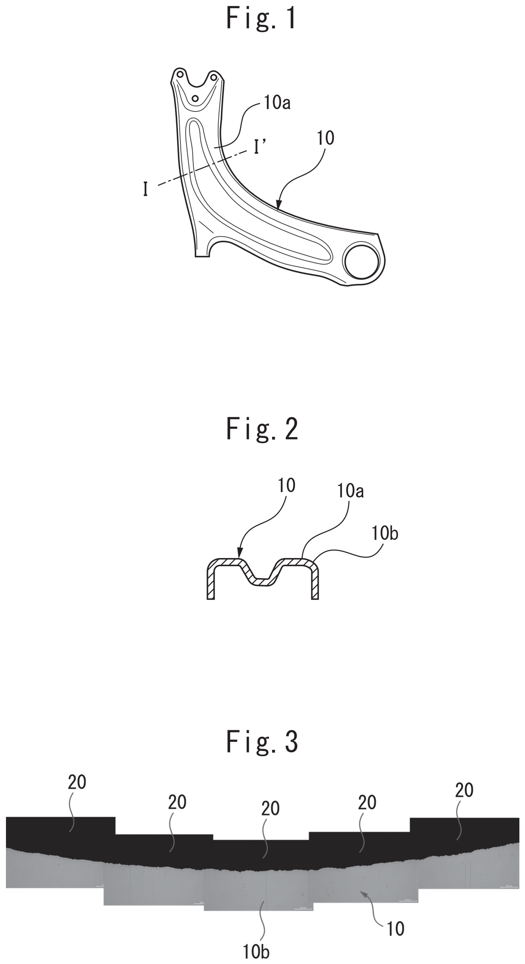

FIG. 1 is a view showing an automobile suspension part as one example of a structural part according to the present disclosure, more specifically is a view showing a lower arm 10 of a suspension. Further, FIG. 2 is a view showing a cross-section along a one-dot chain line I-I' in FIG. 1. Note that, the structural part according to the present disclosure is not limited to one for automobile use. The lower arm 10 is press-formed, burled, etc. and has a flat part (top plate part) 10a and bent part 10b. In FIG. 2, an M-shaped cross-section including the flat part 10a and bent part 10b is shown. The inventors discovered that by having the bent part 10b of a structural part formed from steel sheet (low Si type ultra-high tensile material) satisfy the following formula (1) and formula (2), more preferably satisfy formula (1)' and formula (2)', it is possible to improve the fatigue properties over the past.

$$25 \leq \sqrt{\text{area}} \leq 40 \dots (1)$$

$$0.17 \leq r/t \leq 6.90 \dots (2)$$

$$30 \leq \sqrt{\text{area}} \leq 40 \dots (1)'$$

$$0.17 \leq r/t \leq 3.45 \ldots (2)'$$

where,

√area: square root of projected area of fine defects at inside bend side of bent part 10b (parameter showing roughness of surface after processing) [μm]

"r": smallest value of radius of curvature of inside bend side of bent part 10b [mm]

"t": sheet thickness of flat part 10a [mm].

As one example, the flat part 10a is a part reduced in thickness from the thickest part by within 10% and not subjected to large strain due to bending. The flat part 10a may also be a part having the same sheet thickness as the sheet thickness of the material.

As explained above, the inventors intensively studied the value of the √area and the value of r/t described in NPL 1 when using an ultra-high tensile material better in forming limit than the past so as to form a bent part and as a result discovered that it is possible to improve the fatigue properties over the past by prescribing the value of the √area and the value of r/t as predetermined ranges.

In the structural part according to the present disclosure, the bent part is formed by press-forming, burling, etc. As an example of the processing method when forming a bent part, bending may be performed in the state with the surface of the bent part at the inside bend side contacting a die. For example, by conducting tests in advance and determining the conditions at the time of bending (for example, inside bend side R, clearance of die, etc.), it becomes possible to perform the bending in a state with the surface of the inside bend side contacting a die. Due to this, it becomes harder for the surface roughness of the inside bend side to increase and the fatigue durability rises. Note that the value of √area of a structural part which has been formed by machine grinding is about 6.9 or so, therefore formula (1) is not satisfied. The structural part according to the present disclosure does not include such a machine ground part.

4. Method of Evaluation of Surface Roughness of Inside Bend Side

When evaluating the surface roughness of the inside bend side of the bent part 10b, the curved surface is converted to a flat surface to evaluate the surface roughness. For this reason, a cross-section vertical to the surface of the flat part 10a (that is, the cross-section shown in FIG. 2) is finished to a mirror surface as the measurement surface to prepare a sample of the cross-section of the bent part 10b. An optical microscope is used to obtain five images of the inside bend side of the bent part 10b by a power of 500x, and the five acquired images 20 are joined as shown in FIG. 3. Further, a "Find Edges" function of image processing software (imageJ) is used to extract the contours of the surface relief from the differences of the pixel values and an "Analyze Line Graph" function is used to output the (x, y) coordinates (unit: μm). Note that, if the structural part is painted by electrodeposition etc., the paint is peeled off, then the images are obtained.

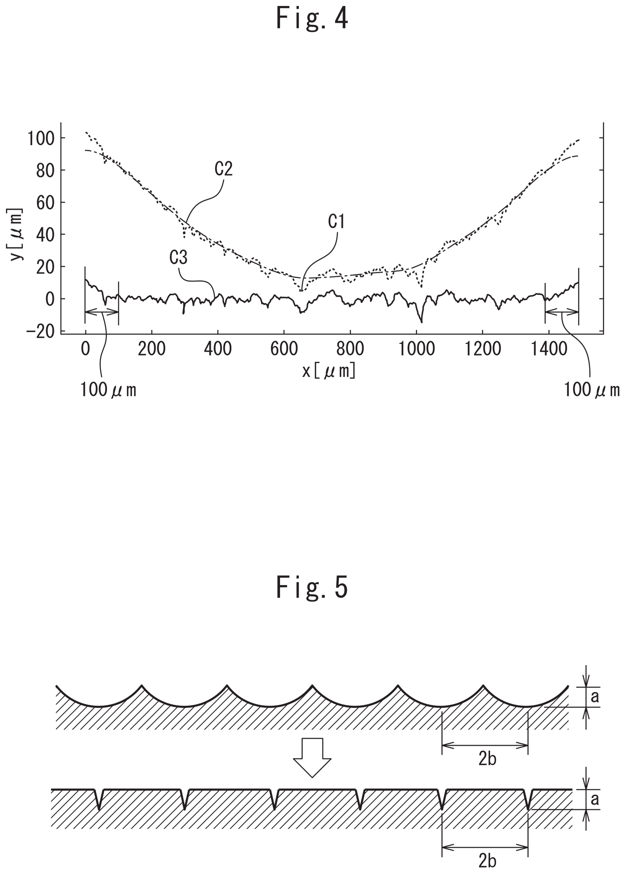

FIG. 4 is a graph showing a technique for using the output coordinates (characteristic line C1) for converting a curved surface to a flat surface for evaluating surface roughness. The characteristic line C1 (broken line) obtained by the image processing is processed by a σ=50 Gaussian filter to find a characteristic line C2 (one dot chain line). The difference between the two is obtained to remove undulation of the long period bent shape of the cross-section of the bent part 10b (that is, the shape of an arc with an inside bend side R) and obtain the characteristic line C3 (solid line) of the short period roughness component.

The Gaussian filter is not effective at the end parts of the characteristic line C1. As shown in FIG. 4, the characteristic lines C1 and C2 diverge, therefore data minus the range of 100 μm from the two end parts of the characteristic line C3 is used to obtain the arithmetic mean roughness Ra and mean length of the roughness elements Rsm. Ra is two times the mean value of the absolute deviation of the mean line showing the average of the characteristic line C3 and the characteristic line C3 (mean deviation),while Rsm is the mean value of the distance of one period of a peak->valley found from the intersections of the roughness curve shown by the characteristic line C3 with the mean line. The lowest height defining a peak or valley is made 2 μm. If 2 μm or less, the roughness is deemed noise and deemed parts of the peaks or valleys before and after that.

FIG. 5 is a view schematically showing surface roughness of an inside bend side expressed by a characteristic line C3. As shown in FIG. 5, the height "a" and pitch 2b are values assuming the surface roughness is comprised of periodic relief shapes and the √area in formula (4) and formula (5) is a value obtained assuming the surface roughness is comprised of periodic relief shapes. Note that the cross-section shown at the top section in FIG. 5 can be replaced by the cross-section shown at the bottom section. As shown in FIG. 5, Ra found in the above way corresponds to the height "a" of roughness of formula (4) and formula (5) while Rsm corresponds to the pitch 2b of roughness of formula (4) and formula (5). Therefore, it is possible to find Rsm and Ra based on the image of the cross-section of the bent part 10b and calculate √area based on formula (4) and formula (5).

Note that the maximum height Rz (difference of height of highest peak and depth of lowest valley) may also be used as the height "a" of roughness. Further, as the pitch 2b of the roughness, the average pitch of roughness of $a_s$ or more found from the following formula (6) may be used. Note that the measurement section is made a range of 500 $\mu$m at the center of the characteristic line C3.

$$a_S = 0.1716 \cdot (1+120/HV)^6 = 1.05 \ ...(6)$$

5. Regarding High Si Type and Low Si Type

Both of the high Si type and low Si type are comprised of ultra-high tensile materials with a tensile strength of 980 MPa or more (DP (dual phase) steel)). The Vickers hardness HV is 310 or more, preferably 340 or more. In general, in such a high strength material, the surface roughness of the inside bend side has a remarkable effect on the fatigue durability, but in the high Si type and low Si type according to the present disclosure, by adjusting the Si content and, for the high Si type, adjusting the later explained n' value, an ultra-high tensile material better in forming limit than the past is obtained.

By measuring the Vickers hardness of the structural part, it is possible to judge if the structural part is comprised of an ultra-high tensile material of a tensile strength of 980 MPa or more according to the present embodiment. Using the lower arm 10 shown in FIG. 1 and FIG. 2 as an example, the method for measuring the hardness of a processed structural part for automobile use will be explained. To measure the hardness of the base material not affected by bending, the hardness is measured at the flat part 10a away from the bent part 10b and not subjected to large strain due to bending.

The cross-section vertical to the surface of the flat part 10a (that is, the cross-section shown in FIG. 2) is used as the measurement surface to obtain a sample. The measurement surface is prepared for use for a hardness test. The measurement surface is prepared by the method of JIS Z 2244: 2009. #600 to #1500 silicon carbide paper is used to polish the measurement surface, then a solution of particle size 1 $\mu$m to 6 $\mu$m diamond powder dispersed in alcohol or other diluent or pure water is used to finish the measurement surface to a mirror surface. The measurement surface finished to a mirror surface in such a way is tested for hardness by the method described in JIS Z 2244: 2009. Note that by making a cross-section the measurement surface, the effect of paint etc. on the surface on the measurement value of hardness can be suppressed.

Specifically, a micro Vickers hardness tester is used to measure 30 points at the 1/4 position of sheet thickness of the flat part 10a adjoining the bent part 10b of the sample by a load of 500 gf at intervals of 3 times or more of the indentation and the average value of these is made the hardness of the member.

High Si type steel sheet is comprised of ferrite and tempered martensite in the microstructure. Ferrite is a soft microstructure and has an excellent n-value and uniform elongation (u-El). The n-value is correlated with the uniform elongation. High Si type steel sheet includes soft ferrite, therefore has the property of a large hardness difference between microstructure (hardness difference among microstructures). On the other hand, low Si type steel sheet is comprised of mainly bainite in the microstructure (sometimes including tempered martensite and ferrite), compared with the high Si type, it has the property of a small hardness difference between microstructures (hardness difference among microstructures).

In the present disclosure, the high Si type and the low Si type are differentiated based on a nanoindentation hardness measured by a nanoindentation test (below, also called the "nano-hardness"). More specifically, as a parameter showing the work-hardening ability of a material, the ratio of an interquartile range of the nano-hardness with respect to the mean nano-hardness (=interquartile range of nano-hardness/mean nano-hardness) is used to differentiate the high Si type and the low Si type.

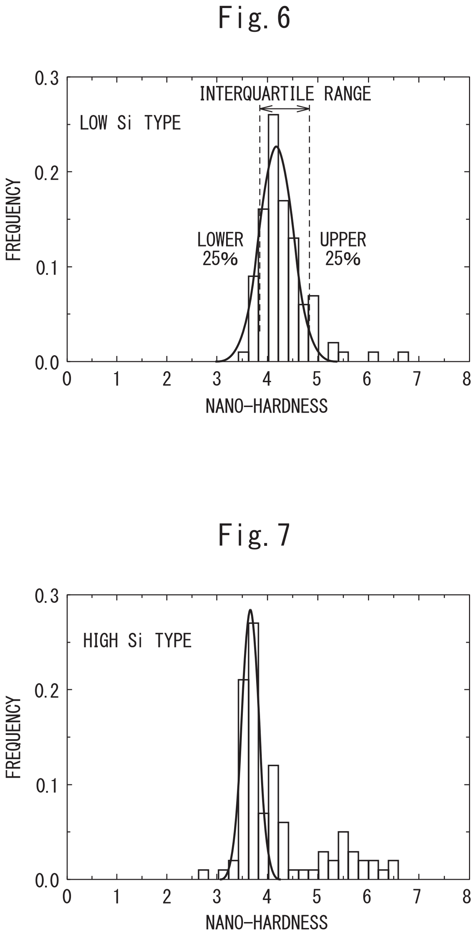

FIG. 6 is a histogram showing a distribution of nano-hardness of the low Si type. Further, FIG. 7 is a histogram showing a distribution of nano-hardness of the high Si type. In FIG. 6 and FIG. 7, the abscissa indicates the nano-hardness while the ordinate indicates the frequency.

The sample for measurement of the nano-hardness is obtained from the same position as measurement of the hardness of a member by the above explained Vickers hardness test. The measurement surface of the sample is the same as the Vickers hardness test. The measurement surface is finished to a mirror surface and the nano-hardness is measured at the 1/4 position of sheet thickness. At this time, the load is made 2500 uN and 100 points are measured. A distance between indentations of 5 $\mu$m or more was secured and the nano-hardness (that is, indent hardness) was found based on ISO14577-1 (Annex A). Further, the interquartile range and average nano-hardness were calculated from the indent hardnesses of the 100 points obtained above.

In the high Si type, soft ferrite is contained. The hardness difference among structures is great, therefore as shown in FIG. 7, peaks of the nano-hardness appear at two locations. A hard and soft microstructure are included. In the high Si type, due to the inclusion of the soft microstructure derived from ferrite, the characteristic of the n-value is excellent. On the other hand, in the low Si type, the hardness difference among structures is small, therefore as shown in FIG. 6, there is a single peak of nano-hardness.

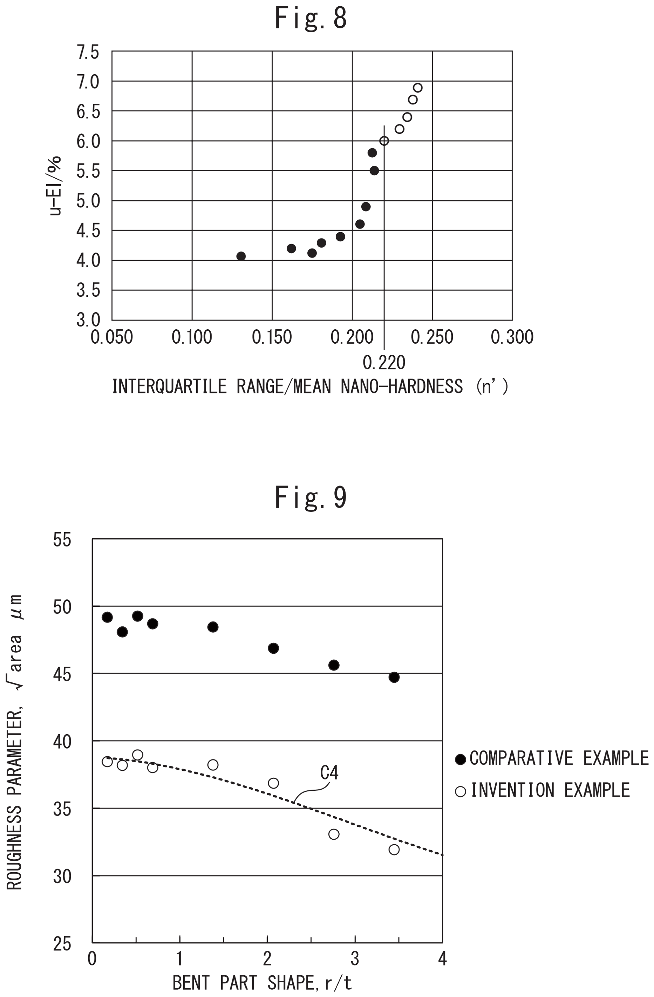

FIG. 8 is a graph showing a uniform elongation (u-El: ordinate) and a distribution of a value obtained by dividing an interquartile range by a mean nano-hardness (n': abscissa) for the high Si type and low Si type. The larger the value of the uniform elongation and, further, the larger the value of n', the better the formability. The white circles (o) in FIG. 8 show the high Si type while the black circles (•) show the low Si type. The high Si type is higher in uniform elongation showing the work-hardening ability than the low Si type, but, as explained above, there is scale derived from the Si, therefore the surface roughness becomes relatively larger. As a result of study, it was learned that if in the high Si type, the range of formula (1) is made $33 \leq \sqrt{area} \leq 44$ and the range of formula (2) is made $0.17 \leq r/t \leq 3.45$, if the value of the uniform elongation is 6% or more, the surface roughness of the inside bend side after processing is suppressed, and the fatigue properties are better than the conventional products. On the other hand, in the low Si type, as a result of study in the later explained examples, the surface roughness due to scale derived from Si is small and therefore propagation of fine cracks at the inside bend side is suppressed, so by making the range of formula (1) $30 \leq \sqrt{area} \leq 40$ and making the range of formula (2) $0.17 \leq r/t \leq 3.45$, even with a value of uniform elongation of less than 6%, fatigue durability better than conventional products (later explained comparative examples) could be satisfied.

As shown in FIG. 8, in the high Si type, if replacing the uniform elongation of 6% or more with the n' obtained from the nano-hardness, the result becomes 0.22 or more. To find the uniform elongation, measurement by a tensile test is necessary, but finding the uniform elongation from a structural part is not easy. On the other hand, with the nano-hardness, a sample can be easily obtained from a structural part.

For this reason, in the present embodiment, the properties of the high Si type and low Si type materials are evaluated by the value n' obtained by dividing the interquartile range by the average nano-hardness. The high Si type can give an n' of 0.22 or more while the low Si type can give an n' of less than 0.22.

The low Si type is comprised of DP steel with a tensile strength of 980 MPa or more. The content of Si is, by mass%, less than 0.9%. By making the content of Si less than 0.9%, the surface roughness derived from the scale originating from the Si can be kept small. In the present embodiment, the low Si type is basically characterized by an n' of less than 0.22. Aside from this feature and the content of Si being less than 0.9%, the chemical composition and method of production of the material are basically not limited. Note that, the upper limit side of the tensile strength applicable to is up to 1300 MPa. As one example, the low Si type may have a chemical composition, by mass%, of C: 0.01 to 1.0%, Si: 0.01% or more and less than 0.9%, Mn: 0.10 to 5.00%, P: 0.100% or less, S: 0.0300% or less, N: 0.0100% or less, O: 0 to 0.020%, Al: 0 to 1.000%, Cr: 0 to 2.00%, Cu: 0 to 2.00%, Ni: 0 to 2.00%, Mo: 0 to 3.00%, Co: 0 to 3.00%, Nb: 0 to 0.150%, V: 0 to 1.00%, Ti: 0 to 1.00%, W: 0 to 1.00%, Sn: 0 to 1.00%, Sb: 0 to 0.50%, Ta: 0 to 0.10%, As: 0 to 0.050%, B: 0 to 0.0100%, Ca: 0 to 0.100%, Mg: 0 to 0.100%, Zr: 0 to 0.100%, Hf: 0 to 0.100%, Bi: 0 to 0.100%, Zn: 0 to 0.200%, REM: 0 to 0.100%, and a balance of Fe and impurities. Further, in the above chemical composition, the lower limits of the contents of the optional elements may be 0.0001% or 0.001%. Further, it is also possible to use steel sheet obtained by rolling steel having the above chemical composition at room temperature to 1300°C or steel sheet obtained by application of heat treatment, painting, or other surface treatment after rolling.

The high Si type can give an n' of 0.22 or more by making the content of Si a mass% of 0.9% or more. The high Si type is in the end characterized by the n' being 0.22 or more. Aside from this feature and the content of Si being 0.9% or more, the chemical composition and process of production of the material are basically not limited. The high Si type may have a chemical composition similar to the above-mentioned low Si type aside from the content of Si being 0.9% or more. Further, in the same way as the low Si type, in the above chemical composition, the lower limits of the contents of the optional elements may be 0.0001% or 0.001%. It is also possible to use steel sheet obtained by rolling steel having the above chemical composition at room temperature to 1300°C or steel sheet obtained by performing heat treatment, painting, or other surface treatment after rolling.

EXAMPLES

6. Examples

Below, the embodiments of the present invention will be explained more specifically using examples. These examples are just illustrations for confirming the advantageous effects of the present invention and do not limit the present invention.

Sheet thickness 2.9 mm low Si type materials were bent by the radii of curvature "r" shown in Table 1 to fabricate the lower arms of Comparative Examples 1 to 8 and Invention Examples 1 to 8 shown in Table 1. As shown in Table 1, respectively before processing and after processing, the above-mentioned method was used to measure Rz and Rsm and find Rz/Rsm, $\sqrt{area}/2b$, and $\sqrt{area}$ [μm]. Invention Examples 1 to 8 after processing have an $\sqrt{area}$ [μm] satisfying formula (1) and have an r/t satisfying formula (2). On the other hand, the conventional products of Comparative Examples 1 to 8 do not satisfy formula (1). Comparative examples and invention examples assigned the same numbers are the same in values of inside bend radius of curvature "r" [mm], sheet thickness "t" [mm], and r/t to enable comparison of the fatigue characteristics of the comparative examples and invention examples. For example, the values of these are the same in Comparative Example 1 and Invention Example 1. Regarding the √area, during processing, the surface roughness of the inside bend side of the bent part 10b becomes greater, therefore the value after processing will never fall below the value before processing. Note that, in measurement of the Rz and Rsm before processing, the characteristic line corresponding to the characteristic line C3 of FIG. 4 is directly obtained without converting a curved surface to a flat surface.

The lower arms of the comparative examples and invention examples were tested for fatigue by applying a load to the lower arms in the vehicle front-back direction. Specifically, the lower arms of Comparative Examples 1 to 8 and the lower arms of Invention Examples 1 to 8 differing in roughness parameter √area after working etc. were measured for strength after 200,000 operations time after application of a load to the bent part in the vehicle front-back direction. Note that, the "strength after 200,000 operations time" is the load stress generated at the lower arm in repetition 200,000 times before fatigue failure occurs.

In pairs of comparative examples and invention examples with the same ratio r/t of the inside bend radius of curvature to the sheet thickness, the time strength $\sigma$f1 of the comparative examples and the time strength $\sigma$f2 of the invention examples were compared and the fatigue durability of the invention examples was evaluated. Specifically, for each invention example, based on the results of comparison with the comparative examples, cases where the value of $\sigma$f2/$\sigma$f1 exceeded 1.2 were evaluated as "G (good)" while cases where the value of $\sigma$f2/$\sigma$f1 exceeded 1.4 were evaluated as "VG (very good)".

[Table 1]

Table 1

| | | Inside bend radius of curvature [r/mm] | Sheet thickness "t" [mm] | r/t | n' | Roughness parameters before processing | | | | | Roughness parameters after processing | | | | | Effect of raising fatigue durability |
| --- | --- | --- | --- | --- | --- | --- | --- | --- | --- | --- | --- | --- | --- | --- | --- | --- |
| | | | | | | $Rz$ (=a) | Rsm (=2b) | Rz/Rsm (=a/2b) | √area/2 b | √area/ μm | $Rz$ (=a) | Rsm (=2b) | $Rz/R$sm (=a/2b) | √area/ 2b | √area/ μm | |
| Comp. ex. | Comp. Ex. 1 | 0.5 | 2.9 | 0.17 | 0.17 | 11.7 | 239.0 | 0.049 | 0.136 | 32.5 | 28.3 | 129.4 | 0.219 | 0.380 | 49.2 | - |
| | Comp. Ex. 2 | 1.0 | 2.9 | 0.34 | 0.15 | 10.9 | 235.6 | 0.046 | 0.128 | 30.3 | 28.1 | 126.5 | 0.222 | 0.380 | 48.1 | - |
| | Comp. Ex. 3 | 1.5 | 2.9 | 0.52 | 0.15 | 11.6 | 236.9 | 0.049 | 0.136 | 32.1 | 26.0 | 129.7 | 0.201 | 0.380 | 49.3 | - |
| | Comp. Ex. 4 | 2.0 | 2.9 | 0.69 | 0.14 | 10.9 | 231.3 | 0.047 | 0.131 | 30.3 | 24.4 | 132.8 | 0.184 | 0.367 | 48.7 | - |
| | Comp. Ex. 5 | 4.0 | 2.9 | 1.38 | 0.16 | 11.6 | 231.7 | 0.050 | 0.139 | 32.1 | 21.7 | 145.8 | 0.149 | 0.332 | 48.4 | - |
| | Comp. Ex. 6 | 6.0 | 2.9 | 2.07 | 0.17 | 11.5 | 232.0 | 0.050 | 0.138 | 31.9 | 19.3 | 165.6 | 0.117 | 0.283 | 46.9 | - |
| | Comp. Ex. 7 | 8.0 | 2.9 | 2.76 | 0.16 | 11.1 | 238.7 | 0.047 | 0.130 | 31.0 | 18.0 | 184.3 | 0.098 | 0.247 | 45.6 | - |
| | Comp. Ex. 8 | 10.0 | 2.9 | 3.45 | 0.15 | 11.1 | 236.6 | 0.047 | 0.131 | 30.9 | 17.3 | 196.3 | 0.088 | 0.228 | 44.7 | - |
| | Inv. Ex. 1 | 0.5 | 2.9 | 0.17 | 0.16 | 10.3 | 202.8 | 0.051 | 0.140 | 28.4 | 15.4 | 148.6 | 0.103 | 0.259 | 38.5 | G |
| | Inv. Ex. 2 | 1.0 | 2.9 | 0.34 | 0.16 | 9.4 | 199.3 | 0.047 | 0.131 | 26.2 | 14.9 | 162.7 | 0.091 | 0.235 | 38.2 | G |
| | Inv. Ex. 3 | 1.5 | 2.9 | 0.52 | 0.14 | 9.2 | 201.4 | 0.045 | 0.127 | 25.6 | 15.0 | 175.9 | 0.085 | 0.222 | 39.0 | G |

(continued)

|  |  | Inside bend radius of curvature [r/mm] | Sheet thickness "t" [mm] | r/t | n' | Roughness parameters before processing | | | | | Roughness parameters after processing | | | | | Effect of raising fatigue durability |
|  |  |  |  |  |  | $Rz$ (=a) | Rsm (=2b) | Rz/Rsm (=a/2b) | √area/2 b | √area/ μm | $Rz$ (=a) | Rsm (=2b) | $Rz/R$sm (=a/2b) | √area/ 2b | √area/ μm |  |
| Inv. ex. | Inv. Ex. 4 | 2.0 | 2.9 | 0.69 | 0.16 | 10.2 | 197.1 | 0.052 | 0.143 | 28.2 | 14.4 | 183.3 | 0.079 | 0.207 | 38.0 | G |
|  | Inv. Ex. 5 | 4.0 | 2.9 | 1.38 | 0.14 | 9.6 | 201.3 | 0.048 | 0.132 | 26.6 | 14.5 | 185.9 | 0.078 | 0.206 | 38.2 | G |
|  | Inv. Ex. 6 | 6.0 | 2.9 | 2.07 | 0.17 | 9.8 | 198.6 | 0.049 | 0.137 | 27.2 | 13.8 | 192.7 | 0.072 | 0.191 | 36.9 | VG |
|  | Inv. Ex. 7 | 8.0 | 2.9 | 2.76 | 0.16 | 9.8 | 200.6 | 0.049 | 0.136 | 27.3 | 12.2 | 196.5 | 0.062 | 0.168 | 33.1 | VG |
|  | Inv. Ex. 8 | 10.0 | 2.9 | 3.45 | 0.16 | 10.1 | 198.0 | 0.051 | 0.141 | 27.8 | 11.7 | 197.5 | 0.059 | 0.162 | 31.9 | VG |

FIG. 9 is a graph plotting the √area and r/t for each of Invention Examples 1 to 8 and Comparative Examples 1 to 8 shown in Table 1. In FIG. 9, the white circle (o) marks indicate invention examples while the black circle (•) marks indicate comparative examples. As shown in FIG. 9, the smaller the r/t, that is, the smaller the "r", the more the value of the √area increases and the rougher the surface roughness of the inside bend side becomes, therefore the fatigue durability falls. However, the Invention Examples 1 to 8 respectively fall in value of √area from the respective Comparative Examples 1 to 8 with the same r/t. Compared with Comparative Examples 1 to 8, the surface roughness of the inside bend sides hardly deteriorates much at all and the surfaces of the inside bend parts are smooth. For this reason, from the results of Table 1, it is learned that the fatigue characteristics of Invention Examples 1 to 8 are better than Comparative Examples 1 to 8. Further, from the results of Table 1, it is learned that the larger the "r" and the smaller the value of the √area, the better the fatigue characteristics than the comparative examples with the same "r".

In FIG. 9, the characteristic line C4 approximating the line connecting the plots of Invention Examples 1 to 8 by a curve can expressed by the following formula (7):

$$\sqrt{area}=0.0822(r/t)^3 -0.7216 (r/t)^2 -0.2404(r/t)+38.782... (7)$$

Therefore, preferably, the structural part according to the present disclosure satisfies the following formula (8). Note that, in formula (8), the √area of formula (7) plus a 5% margin is made the upper limit value.

$$30 \leq \sqrt{area} \leq 1.05\{0.0822(r/t)^3 -0.7216 (r/t)^2 -0.2404(r/t)+38.782\} ... (8)$$

REFERENCE SIGNS LIST

    10 lower arm
    10a flat part
    10b bent part
    20 image

**Claims**

1. A structural part comprised of steel sheet,

    the structural part having a flat part and a bent part,
    the bent part satisfying the following formula (1) and formula (2):

$$25 \leq \sqrt{area} \leq 40 ... (1)$$

$$0.17 \leq r/t \leq 6.90 ... (2)$$

    where,
    √area is a square root of a projected area of fine defects at an inside bend side of the bent part [μm]
    "r" is the smallest value of a radius of curvature of the inside bend side of the bent part [mm]
    "t" is a sheet thickness of the flat part [mm].

2. A structural part according to claim 1, further satisfying the following formula (1)' and formula (2)':

$$30 \leq \sqrt{area} \leq 40 ... (1)'$$

$$0.17 \leq r/t \leq 3.45 ... (2)'$$

3. The structural part according to claim 1, wherein a Vickers hardness of the flat part is 310 or more.

4. The structural part according to claim 1, wherein a Vickers hardness of the flat part is 340 or more.

5. The structural part according to any one of claims 1 to 3, further satisfying the following formula (3):

$$30 \leq \sqrt{area} \leq 1.05\{0.0822(r/t)^3 - 0.7216\ (r/t)^2 - 0.2404(r/t) + 38.782\} \ ... \ (3)$$

# Fig. 1

# Fig. 2

# Fig. 3

# Fig. 4

# Fig. 5

# Fig. 6

# Fig. 7

Fig. 8

Fig. 9

## INTERNATIONAL SEARCH REPORT

| International application No. |
| --- |
| **PCT/JP2024/021680** |

**A.    CLASSIFICATION OF SUBJECT MATTER**

*B60G 7/00*(2006.01)i; *C22C 38/00*(2006.01)i; *C22C 38/60*(2006.01)i
FI:    B60G7/00; C22C38/00 301W; C22C38/00 301S; C22C38/60

According to International Patent Classification (IPC) or to both national classification and IPC

**B.    FIELDS SEARCHED**

Minimum documentation searched (classification system followed by classification symbols)

B60G1/00-99/00; C22C38/00; C22C38/60; B21D1/00-55/00; B62D17/00-25/08; B62D25/14-29/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2007-76410 A (NIPPON STEEL CORPORATION) 29 March 2007 (2007-03-29) | 1-5 |
| A | JP 2009-274077 A (NIPPON STEEL CORPORATION) 26 November 2009 (2009-11-26) | 1-5 |
| A | WO 2020/184372 A1 (NIPPON STEEL CORPORATION) 17 September 2020 (2020-09-17) | 1-5 |

☐ Further documents are listed in the continuation of Box C.      ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **02 July 2024** | **16 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/021680**

| Patent document cited in search report | | | Publication date (day/month/year) | Patent family member(s) | | | Publication date (day/month/year) |
|---|---|---|---|---|---|---|---|
| JP | 2007-76410 | A | 29 March 2007 | (Family: none) | | | |
| JP | 2009-274077 | A | 26 November 2009 | US | 2011/0121639 | A1 | |
| | | | | EP | 2298465 | A1 | |
| | | | | KR | 10-2010-0123749 | A | |
| | | | | CN | 101980804 | A | |
| WO | 2020/184372 | A1 | 17 September 2020 | US | 2022/0090228 | A1 | |
| | | | | EP | 3940092 | A1 | |
| | | | | CN | 113366127 | A | |
| | | | | KR | 10-2021-0107839 | A | |
| | | | | MX | 2021009296 | A | |

Form PCT/ISA/210 (patent family annex) (July 2022)

**EP 4 729 316 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7036298 B

- JP 6954211 B

**Non-patent literature cited in the description**

- **YUKITAKA MURAKAMI** ; **KOJI TAKAHASHI** ; **KOKI YAMASHITA**. Quantitative Evaluation of Effects of Surface Roughness on Fatigue Strength. *Transactions of the JSME (Edition A)*, 1997, vol. 63 (612), 1612-1619